# EUROPÄISCHE PATENTSCHRIFT

(11) **EP 2 363 617 B1**
(45) Veröffentlichungstag und Bekanntmachung des Hinweises auf die Patenterteilung: **21.11.2012**
(21) Anmeldenummer: 11155605.6
(22) Anmeldetag: 23.02.2011
(51) Int. Cl.: F16D 65/56

(54) **Scheibenbremse für ein Nutzfahrzeug**
Disc brake for a commercial vehicle
Frein à disque pour un véhicule utilitaire

(30) Priorität: 25.02.2010 DE 102010009261
(43) Veröffentlichungstag der Anmeldung: 07.09.2011
(73) Patentinhaber: KNORR-BREMSE Systeme für Nutzfahrzeuge GmbH, 80809 München (DE)
(72) Erfinder: Härtl, Thomas, 94501, Beutelsbach (DE)
(74) Vertreter: Mattusch, Gundula

(56) Entgegenhaltungen:
- EP-A1- 0 569 031
- EP-A1- 2 110 575
- DE-A1- 4 032 886
- DE-A1- 4 323 292
- DE-A1-102005 042 795
- DE-U1-202006 010 681

## Beschreibung

Die Erfindung betrifft eine Scheibenbremse für ein Nutzfahrzeug nach dem Oberbegriff des Anspruchs 1.

Zur Montage der Stellspindeln ebenso wie der Nachstelleinrichtung ist rückseitig im Bremssattel, d.h. auf der der Bremsscheibe abgewandten Rückseite des Bremssattels eine Montageöffnung vorgesehen, die durch einen Deckel verschlossen ist.

Dieser Deckel überdeckt auch eine Synchronisations-Einrichtung, mit der ein Gleichlauf der beiden Stellspindeln bei einer Nachstellung erreicht wird, wobei die Stellspindeln über ein Transmissionselement bewegungsabhängig miteinander verbunden sind.

Dabei ragen die Enden der beiden Stellspindeln in den Innenraum des eine Kappe bildenden Deckels, der üblicherweise mit dem Bremssattel verschraubt ist.

Bei dieser Art der Befestigung ist zwar eine lagegenaue und damit einfache Montage möglich, da die Schrauben auch beim Anbringen des Deckels eine Fixierung darstellen, andererseits ist diese Verschraubung mit einigen, zum Teil erheblichen Nachteilen verbunden.

So ist zunächst einmal der relativ hohe Fertigungsaufwand zu nennen, der sich aus dem Einbringen von Gewindebohrungen in den Bremssattel ergibt. Des Weiteren ergeben sich durch diese Gewindebohrungen aufgrund von Materialschwächungen in Kombination mit der betriebsbedingt auftretenden Dauer- bzw. Wechselspannung potentielle Bruchstellen, denen nur durch einen hohen konstruktiven Aufwand entgegengewirkt werden kann.

Um hier Abhilfe zu schaffen, ist bereits vorgeschlagen worden, den Deckel am Bremssattel festzukleben, wozu eine gleichzeitig den Verbindungsbereich Deckel/Bremssattel abdichtende 2-Komponenten-Dichtung als Flüssigdichtung zum Einsatz kommt, die nach einem Aushärten eine stoffschlüssige Verbindung ergibt.

Hier stellt sich jedoch das Problem, dass der Deckel noch vor dem Aushärten der Dichtung seine ohnehin nicht exakt definierte Lage verlassen kann, so dass die Funktion des Deckels und die Dichtheit des Verbindungsbereiches zumindest eingeschränkt sind.

Alles in allem stellt der bekannte Stand der Technik sowohl hinsichtlich der Fertigung wie auch hinsichtlich der Funktion des Deckels bzw. der Dichtung einen äußerst unbefriedigenden Zustand dar.

Der Erfindung liegt die Aufgabe zugrunde, eine Scheibenbremse der gattungsgemäßen Art so weiterzuentwickeln, dass mit geringem konstruktivem und fertigungstechnischem Aufwand eine kostengünstigere Herstellung möglich ist und die Standzeit, insbesondere des Bremssattels, verbessert wird.

Diese Aufgabe wird durch eine Scheibenbremse mit den Merkmalen des Anspruchs 1 gelöst.

Die Erfindung ermöglicht eine exakte Positionierung des Deckels, um diesen vorzugsweise durch Kleben am Bremssattel zu befestigen, wobei die durch die Anschlagelemente der Stellspindeln in Korrespondenz mit Anschlagflächen des Deckels dessen Fixierung vor Eintritt der Klebwirkung in jeder radialen Verschieberichtung gewährleisten.

Damit besteht nun die Möglichkeit, eine zur Verschraubung des Deckels mit dem Bremssattel gleichwertige Verbindung herzustellen, durch die die Fertigungskosten erheblich gesenkt werden. Vor allem kann auf das Einbringen von Gewindebohrungen verzichtet werden, wodurch sich nicht nur die Herstellungskosten in einem durchaus bemerkenswerten Umfang reduzieren, sondern auch die eingangs beschriebenen Probleme hinsichtlich einer erhöhten Bruchgefahr des Bremssattels durch Materialschwächung bzw. Kerbwirkung ausgeschlossen sind.

Nach einer vorteilhaften Weiterbildung der Erfindung ist vorgesehen, die Anschlagelemente an an den Stellspindeln vorhandenen Scheiben anzubringen, wobei die Scheibe einer Stellspindel eine Mitnehmerscheibe und die Scheibe der anderen Stellspindel eine Nachstellerscheibe bildet.

Diese Scheiben sind üblicherweise als Blechformteile ausgebildet, so dass die Anschlagelemente lediglich eingeprägt werden müssen, was in einem Arbeitsgang bei der Fertigung der Scheiben erfolgen kann.

Die Form der Anschlagelemente ist je nach Bedarf frei wählbar. Bevorzugt, da besonders einfach herzustellen, ist in die jeweilige Scheibe ein in Richtung des Deckels vorstehender konzentrischer Wulst eingeprägt, an dessen Außenrand der Deckel zur Fixierung anliegt.

Statt eines umlaufenden Wulstes können aber auch, gleichfalls in Richtung des Deckels vorstehende Noppen in die Scheibe eingeformt sein, bevorzugt ebenfalls durch Prägen, wobei dann diese Noppen oder auch Stege mit ihren Außenrandbereichen Anschlagflächen für den Deckel bilden.

Der Deckel selbst ist zur Aufnahme der Antriebsmittel der Stellspindeln, wie bisher, haubenförmig ausgebildet, vor allem im Überdeckungsbereich mit den Scheiben. Dabei bildet die Innenwandung dieser haubenförmigen Ausformung die mit den Anschlagelementen der Stellspindeln korrespondierende Anschlagfläche.

Zum Anbringen des Deckels wird zunächst die Flüssigdichtung, die gleichzeitig Klebefunktion übernimmt, aufgetragen und anschließend der Deckel aufgesetzt, so dass die Flüssigdichtung aushärten kann, wobei ein Verrutschen durch die erfindungsgemäß vorgesehenen Anschlagelemente praktisch ausgeschlossen ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt einer erfindungsgemäßen Scheibenbremse in einer geschnittenen Seitenansicht
- Figur 2: eine Einzelheit der Scheibenbremse, ebenfalls als Teilausschnitt in einer geschnittenen Seitenansicht.

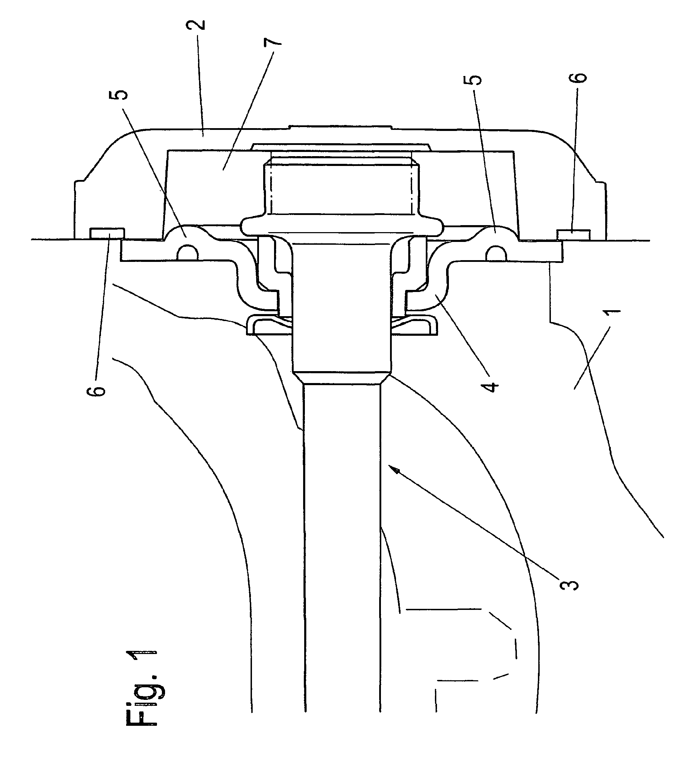

In der Figur 1 ist ein Bremssattel 1 einer Scheibenbremse für ein Nutzfahrzeug dargestellt, in dem vorzugsweise zwei Stellspindeln 3 gelagert sind, von denen in den Figuren jeweils eine gezeigt ist.

Diese Stellspindel 3 ragt endseitig aus dem Bremssattel 1 heraus, wobei sie eine Öffnung eines Aufnahmeraumes des Bremssattels 1 durchtritt, die durch einen Deckel 2 verschlossen ist.

Dieser Deckel 2 ist mittels einer Dichtung 6 mit dem Bremssattel 1 verklebt und überdeckt den Endbereich der Stellspindel 3 vollständig.

An dem dem Deckel 2 zugewandten Ende der Stellspindel 3, ist eine in der Grundfläche runde Scheibe 4 positioniert, die ein Anschlagelement 5 aufweist, das bei dem in der Figur 1 gezeigten Beispiel als ein in Richtung des Deckels 2 vorstehender konzentrischer Ringwulst ausgebildet ist, dessen Außenrandbereich einen Anschlag bildet, an dem eine Anschlagfläche des Deckels 2 anliegt, die durch die Seitenwandung einer Aufnahmekammer 7 des Deckels 2 gebildet ist.

Dabei entspricht das lichte Maß der Aufnahmekammer 7 etwa dem Außendurchmesser des Ringwulstes 5, so dass eine radiale Verschiebesicherung des Deckels 2 gegeben ist.

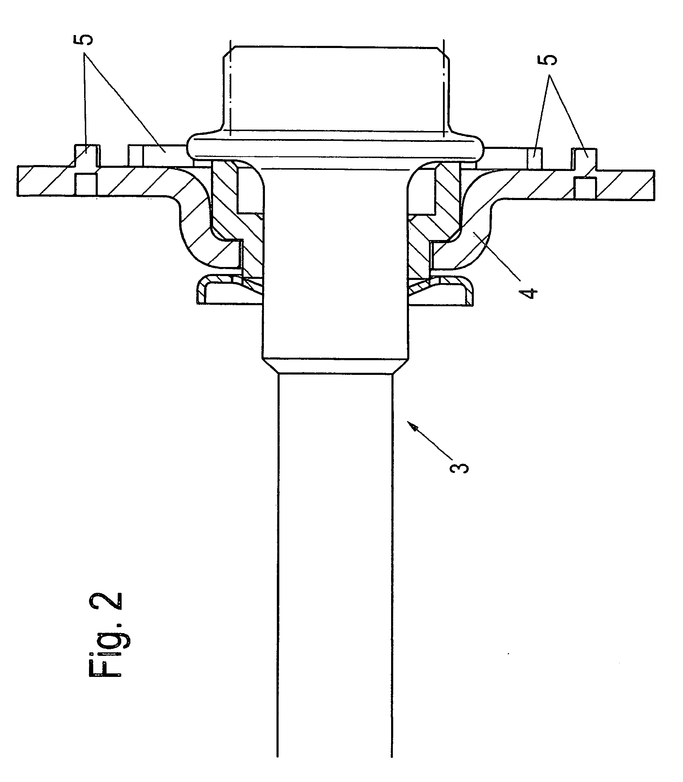

Bei dem in der Figur 2 gezeigten Beispiel, ist lediglich die Stellspindel 3 mit der angeschlossenen Scheibe gezeigt.

Die Anschlagelemente 5 sind hier als Stege ausgebildet, die konzentrisch und abständig zueinander angeordnet vorstehen, vergleichbar dem Ringwulst im Beispiel nach Figur 1.

## Patentansprüche

1. Scheibenbremse für ein Nutzfahrzeug, mit einem Deckel (2), der rückseitig einen Aufnahmeraum eines Bremssattels (1) verschließt und eine außenseitig des Bremssattels (1) positionierte Synchronisationseinrichtung überdeckt, wobei im Bremssattel (1) zwei, in Funktion gegen eine Bremsscheibe pressbare Bremsbeläge angeordnet sind, von denen ein aktionsseitiger über mindestens eine Druckspindel mittels einer Zuspanneinrichtung betätigbar ist, wobei die Druckspindel mit einer im Bremssattel (1) gelagerten Stellspindel (3) einer Nachstelleinrichtung in Wirkverbindung steht, **dadurch gekennzeichnet, dass** die Stellspindel (3) an ihrem dem Deckel (2) zugewandten Endbereich mindestens ein Anschlagelement (5) aufweist, an dem der Deckel (2) radial verschiebegesichert anliegt.

2. Scheibenbremse nach Anspruch 1, **dadurch gekennzeichnet, dass** das Anschlagelement (5) an einer an der Stellspindel (3) angeordneten Scheibe (4) vorgesehen ist.

3. Scheibenbremse nach Anspruch 2, **dadurch gekennzeichnet, dass** das Anschlagelement (5) gegenüber der Scheibe (4) im Übrigen in Richtung des Deckels (2) vorsteht.

4. Scheibenbremse nach einem der vorhergehenden Ansprüche, **dadurch gekennzeichnet, dass** das Anschlagelement (5) aus einem konzentrischen, umlaufenden Wulst gebildet ist.

5. Scheibenbremse nach einem der vorhergehenden Ansprüche, **dadurch gekennzeichnet, dass** mehrere Anschlagelemente (5) als konzentrisch angeordnete, über den Umfang verteilte Noppen oder Stege vorgesehen sind.

6. Scheibenbremse nach einem der vorhergehenden Ansprüche, **dadurch gekennzeichnet, dass** die Anschlagelemente (5) durch Prägen der Scheibe (4) gebildet sind.

7. Scheibenbremse nach einem der Ansprüche 4 bis 6, **dadurch gekennzeichnet, dass** der Außendurchmesser des Wulstes bzw. des konzentrischen Kreises, entlang dessen die Noppen oder Stege angeordnet sind, etwa dem lichten Durchmesser einer Aufnahmekammer (7) des Deckels (2) entsprechen, in der die Stellspindel (3) endseitig einliegt.

8. Scheibenbremse nach einem der vorhergehenden Ansprüche, **dadurch gekennzeichnet, dass** der Deckel (2) mit dem Bremssattel (1) verklebt ist.

9. Scheibenbremse nach einem der vorhergehenden Ansprüche, **dadurch gekennzeichnet, dass** der Deckel (2) mit dem Bremssattel (1) mittels einer ausgehärteten Flüssigdichtting verklebt ist.

## Claims

1. A disc brake for a commercial vehicle, with a cover (2) which on the rear side closes a receiving space of a brake calliper (1) and covers a synchronisation means positioned on the outside of the brake calliper (1), with two brake linings which in operation can be pressed against a brake disc being arranged in the brake calliper (1), of which linings one, on the action side, can be actuated via at least one pressure spindle by means of a brake application means, the pressure spindle being in operative connection with a setting spindle (3) of an adjustment means which is mounted in the brake calliper (1), **characterised in that** the setting spindle (3) has on its end region facing the cover (2) at least one stop element (5) against which the cover (2) lies in a manner radially secured against displacement.

2. A disc brake according to Claim 1, **characterised in that** the stop element (5) is provided on a disc (4) arranged on the setting spindle (3).

3. A disc brake according to Claim 2, **characterised in that** the stop element (5) protrudes with respect to the disc (4) moreover in the direction of the cover (2).

4. A disc brake according to one of the preceding claims, **characterised in that** the stop element (5) is formed from a concentric, circumambient bead.

5. A disc brake according to one of the preceding claims, **characterised in that** a plurality of stop elements (5) are provided as concentrically-arranged knobs or bars which are distributed over the periphery.

6. A disc brake according to one of the preceding claims, **characterised in that** the stop elements (5) are formed by embossing the disc (4).

7. A disc brake according to one of Claims 4 to 6, **characterised in that** the external diameter of the bead or of the concentric circle along which the knobs or bars are arranged corresponds approximately to the internal diameter of a receiving chamber (7) of the cover (2) in which the setting spindle (3) lies at its end side.

8. A disc brake according to one of the preceding claims, **characterised in that** the cover (2) is glued to the brake calliper (1).

9. A disc brake according to one of the preceding claims, **characterised in that** the cover (2) is glued to the brake calliper (1) by means of a cured liquid seal.

## Revendications

1. Frein à disque pour un véhicule utilitaire, comprenant un couvercle (2) qui ferme du côté arrière un espace de réception d'un étrier (1) de frein et qui recouvre un dispositif de synchronisation mis en position du côté extérieur de l'étrier (1) de frein, dans lequel dans l'étrier (1) de frein sont montées deux garnitures de frein, qui peuvent être pressées sur un disque de frein et dont l'une peut être actionnée du côté actionnement par au moins un arbre de poussée au moyen d'un dispositif de serrage, l'arbre de poussée coopérant avec un arbre (3) de réglage, monté dans l'étrier (1) de frein, d'un dispositif de rattrapage de jeu, **caractérisé en ce que** l'arbre (3) de réglage a sur sa partie d'extrémité tournée vers le couvercle (2), au moins un élément (5) de butée, auquel le couvercle (2) s'applique en étant empêché de se déplacer radialement.

2. Frein à disque suivant la revendication 1, **caractérisé en ce que** l'élément (5) de butée est prévu sur un disque (4) monté sur l'arbre (3) de réglage.

3. Frein à disque suivant la revendication 2, **caractérisé en ce que** l'élément (5) de poussée dépasse du disque (4) en outre en direction du couvercle (2).

4. Frein à disque suivant l'une des revendications précédentes, **caractérisé en ce que** l'élément (5) de butée est formé d'un bourrelet concentrique faisant le tour.

5. Frein à disque suivant l'une des revendications précédentes, **caractérisé en ce qu'**il est prévu plusieurs éléments (5) de butée sous la forme de bossages ou de nervures répartis concentriquement sur le pourtour.

6. Frein à disque suivant l'une des revendications précédentes, **caractérisé en ce que** les éléments (5) de butée sont formés en estampant le disque (4).

7. Frein à disque suivant l'une des revendications 4 à 6, **caractérisé en ce que** le diamètre extérieur du bourrelet ou du cercle concentrique le long duquel sont montés les bossages ou les nervures correspond à peu près au diamètre intérieur d'une chambre (7) de réception du couvercle (2), dans laquelle l'arbre (3) de régalage entre du côté de l'extrémité.

8. Frein à disque suivant l'une des revendications précédentes, **caractérisé en ce que** le couvercle (2) est collé à l'étrier (1) de frein.

9. Frein à disque suivant l'une des revendications précédentes, **caractérisé en ce que** le couvercle (2) est collé à l'étrier (1) de frein au moyen d'une étanchéité liquide durcie.
